Europäisches Patentamt

(19) European Patent Office

Office européen des brevets

(11) **EP 1 005 969 B1**

(12) **EUROPEAN PATENT SPECIFICATION**

(45) Date of publication and mention
of the grant of the patent:
**01.09.2004 Bulletin 2004/36**

(51) Int Cl.⁷: **B29B 7/18**, B29B 7/12
// B29C47/40, B29C47/60

(21) Application number: **99203918.0**

(22) Date of filing: **23.11.1999**

(54) **Rotor for mixing elastomers having a variable flange or flight angle**

Rotor für Elastomermischer mit veränderlichem Gewindegang

Rotor pour mélangeur des élastomères avec de filet variable

(84) Designated Contracting States:
**AT BE CH CY DE DK ES FI FR GB GR IE IT LI LU
MC NL PT SE**
Designated Extension States:
**SI**

(30) Priority: **30.11.1998 IT MI982589**

(43) Date of publication of application:
**07.06.2000 Bulletin 2000/23**

(73) Proprietor: **TECHINT COMPAGNIA TECNICA
INTERNAZIONALE S.p.A.
20149 Milano (IT)**

(72) Inventor: **Regalia, Roberto
Lonate Pozzolo (Varese) (IT)**

(74) Representative: **Raimondi, Margherita et al
Dott. Ing. Prof. Alfredo Raimondi S.r.l.,
Piazzale Cadorna, 15
20123 Milano (IT)**

(56) References cited:
**EP-A- 0 595 112**        **EP-A- 0 807 503**
**WO-A-94/02303**        **DE-C- 879 164**
**GB-A- 137 820**        **US-A- 1 354 452**
**US-A- 4 120 920**

## Description

The present invention relates to an internal mixer according to the features of the preamble of appended claim 1 for mixing elastomers and the like, with a couple of rotor comprising a first section of greater axial length, defining a thrusting wing, and a second section of smaller axial length, defining a counter-thrusting wing.

It is known that in the art of processing rubber and plastics, mixing machines of the type called "internal mixers" are used in order to obtain a mixture suitable for being transformed into the finished or semifinished product, said mixing machines being formed internally with a mixing chamber (divided into two half-chambers) having, rotating inside them, two parallel-axis rotors which may, for example, be of the tangential or interpenetrating type.

Said rotors have essentially the function of performing:

- incorporation of the various ingredients forming the processed material which below, for the sake of simplicity, will be called mixture;
- dispersion, i.e. reduction in the diameter, of the fillers, such as carbon black and silica, introduced into the mixture;
- distribution/homogenisation of the fillers inside the mixture so as to make the latter as uniform as possible throughout its mass.

It is also known that, while the dispersion depends on the characteristics of the flow field, such as the shearing force and deformation gradient which the rotors are able to produce on the mixture during rotation, the distribution of the fillers in the polymer matrix depends on the efficiency of the velocity field inside the mixing chamber, namely the capacity of the rotors to move the mixture without creating stagnation points and at the same time cause the mixture to flow from one half-chamber to the other.

The different configurations and geometrical forms of the rotors therefore produce two different types of mixing action defined as follows:

- dispersive mixing = incorporation of the particles of filler into the elastomer matrix and reduction in the mean particle diameter of the individual components incorporated; and
- distributive mixing = uniform distribution and homogenisation of the particles inside the mixture.

More particularly it is known that, in order to obtain distributive mixing, it is necessary for the mixture to be subjected to two different thrusts, i.e. an axial thrust, which causes the flow of the particles of the mixture in the axial direction inside the said half-chamber, and, a transverse thrust, which causes the mixture to pass from one half-chamber to the other one.

It is also known that it is to difficult to maximise the two different mixing actions at the same time since the configurations and geometrical forms of the mixing rotors (housed inside the respective half-chambers of the mixing machines), which determine an improvement in the dispersive mixing, tend to worsen the characteristics of distributive mixing and vice versa.

Numerous attempts have been made, therefore, to design configurations of the rotors which would produce not just an acceptable balance between the two different mixing actions, but also simultaneous optimisation thereof.

Examples of such known rotors are for example illustrated in the patent GB-2,024,635, in which the rotor is divided into two axial sections of different length forming respectively the thrusting wing (of greater length) and the counter-thrusting wing (of smaller length).

Said rotor has constant helix angles and, although functional, it consequently operates in an identical manner in all the zones of the flow field inside the mixing chamber, not allowing simultaneous maximisation of the two dispersive and distributive mixing actions throughout the flow field of the chamber.

The technical problem which is posed, therefore, is that of providing a rotor for internal mixer for mixing elastomer products, which has geometrical characteristics relating to the three-dimensional form and cross-section which are such as to allow simultaneous maximisation of the dispersive and distributive mixing actions in every point of the flow field.

Within the scope of this problem a further requirement is the need to produce an optimum phase-displacement angle between two identical rotors mounted parallel with each other inside an internal mixer machine.

These technical problems are solved according to the present invention by an an internal mixer according to the features of the characterising part of appended claim 1. Preferred embodiments of the invention are disclosed in the dependent claims.

Further details may be obtained from the following description of a non-limiting example of embodiment provided with reference to the accompanying drawings in which:

- Figure 1 shows a schematic sectional view of an internal mixer
- Figure 2 shows a perspective view of one of the two rotors for an internal mixer according to the present invention;
- Figure 3 shows a side view of the rotor according to Fig. 2;
- Figure 4 shows a side view of the rotor according to Fig. 2 rotated through 90°;
- Figure 5 shows the planar development of the profile of the rotor according to the present invention;

- Figure 6 shows a cross-sectional view of the mixing chamber, with an enlarged detail of the external edge of the rotor, according to the invention;
- Figure 7 shows a top plan view of the mixing chamber of an internal mixer according to the invention;
- Figure 8 shows a sectional view along the plane indicated by VIII-VIII in Fig. 7; and
- Figure 9 shows the planar development of a further profile of the rotor for an internal mixer according to the present invention.

As illustrated, an internal mixer 1 comprises a top loading part 1a, a mixing chamber 2 and a base 1b with a hatch 20 for opening the mixing chamber in order to unload the mixture at the end of the cycle.

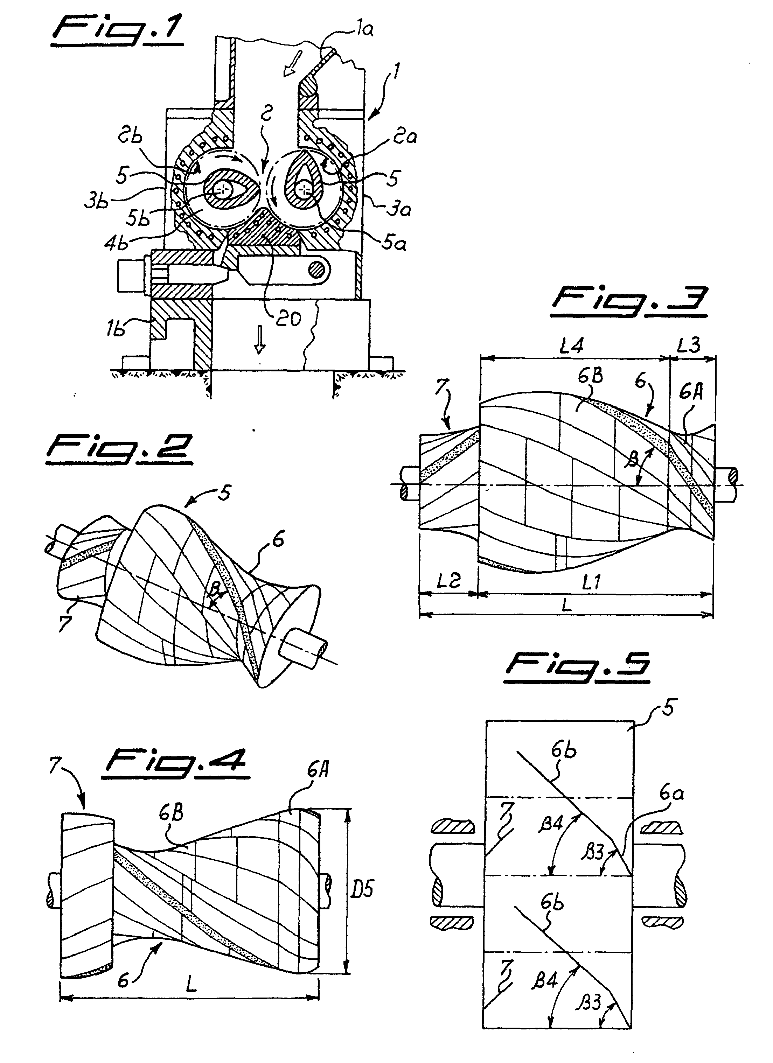

The chamber 2 is in turn formed by two walls 3a,3b and two shoulders (only 4b is visible in Fig. 1) which define the typical configuration of intersecting circumferences of the chamber, which is thus divided into two half-chambers 2a,2b housing internally the respective rotors 5 which in the example are of the tangential type and which rotate about a respective longitudinal axis 5a,5b.

The rotors 5 have a substantially cylindrical shape with an overall length L and diameter D5, but are divided in the longitudinal direction into two separate parts, one of which L1 of greater length, forming the mixture thrusting wing 6, and one L2 of smaller length, which forms the mixture counter-thrusting wing 7.

The two rotors 5 are moreover mounted opposite each inside the chamber 2 (Figs. 1,7) so that each thrusting wing 6 has, corresponding to it, the counter-thrusting wing 7 of the other rotor so as to produce a pressure gradient between the two rotors which facilitates passage of the mixture from one half-chamber to the other, allowing closing of the travel path of the mixture particles which thus circulate inside the chamber passing from one half-chamber to the other, causing the desired distributive mixing.

As shown in Figures 2 and 3, the rotors 5 have a thrusting wing 6 with a twist angle β (i.e. the angle between the axis of rotation of the rotor and a line tangential to any point on the crest of the helix) variable along the extension of the helix of the wing itself.

This variation may be of the continuous type or discontinuous type.

More particularly (Figs. 3 and 5), the thrusting wing 6 has:

- a first part 6a with an axial length L3, forming an angle β3 of between 15° and 75°; preferably this angle β3 is between 15° and 60°; and
- a second part 6b with an axial length L4, forming an angle β4 of between 15° and 75°; preferably this angle β4 is between 25° and 60°.

It has also been demonstrated that the ratio between the lengths in the longitudinal direction L1 and L2 of the two rotor thrusting and counter-thrusting sections may be advantageously between 0.05 and 0.5.

In addition to the variation of the twist angle of the thrusting wing, it has been experimentally wing demonstrated that improvements in the dispersive mixing action are obtained by providing a rotor cross-section having the following characteristics illustrated in Fig. 6 where the parameters A,B,C,D have the following meaning:

A = the minimum distance between the crest of the rotor and the internal wall of the associated mixing half-chamber;
B = the width of the rotor crest;
C = angle of mastication of the mixture;
D = angle of exit from the mixture.

In particular the geometry of the cross-section is preferably characterized by values of A such that:

- the ratio between the minimum distance of the crest of the rotor with a diameter D5 and the chamber wall lies within the following values:

$$0.01 < A/D5 < 0.015$$

- the ratio between the minimum distance (A) of the rotor crest from the chamber wall and the width (B) of the crest itself lies within the following values:

$$0.10 < A/B < 0.5 \text{ and preferably } 0.15 < A/B < 0.25$$

- the angle (C) of mastication of the mixture is between 15° and 35° and preferably between 20° and 25°;
- the angle (D) of exit from the mixture is between 25° and 70° and preferably between 35° and 60°.

The parameter D therefore tends to be increased since the greater its value the greater the space which is produced between the counter-thrusting wing and the thrusting wing of the two rotors, which increases the pressure gradient in the zone where the mixture passes from one half-chamber to the other, favouring overall an improvement in distributive mixing.

Figure 9 shows the planar development of a further profile of the rotor according to the present invention: in this case it is the counter-thrusting wing 7 which has a twist angle σ into the mixture which is varied along the extension of the helix

More particularly the counter-thrusting wing has:

- a first part 7a with an axial length L6, forming an angle σ3 of between 15° and 75°; preferably this angle σ3 is between 30° and 60°; and

- a second part 7b with an axial length L7, forming an angle σ4 of between 15° and 75°; preferably this angle σ4 is between 25° and 60°.

Although described by way of example in two versions with a single variation of the twist angle for the thrusting wing or for the counter-thrusting wing, it is obvious that a person skilled in the art may choose to provide different combinations of variations of the two flanges, i.e. thrusting wing and counter-thrusting wing, and may also introduce more than one variation in angle for the same wing both separately and in combination with one or more variations in angle of the other wing.

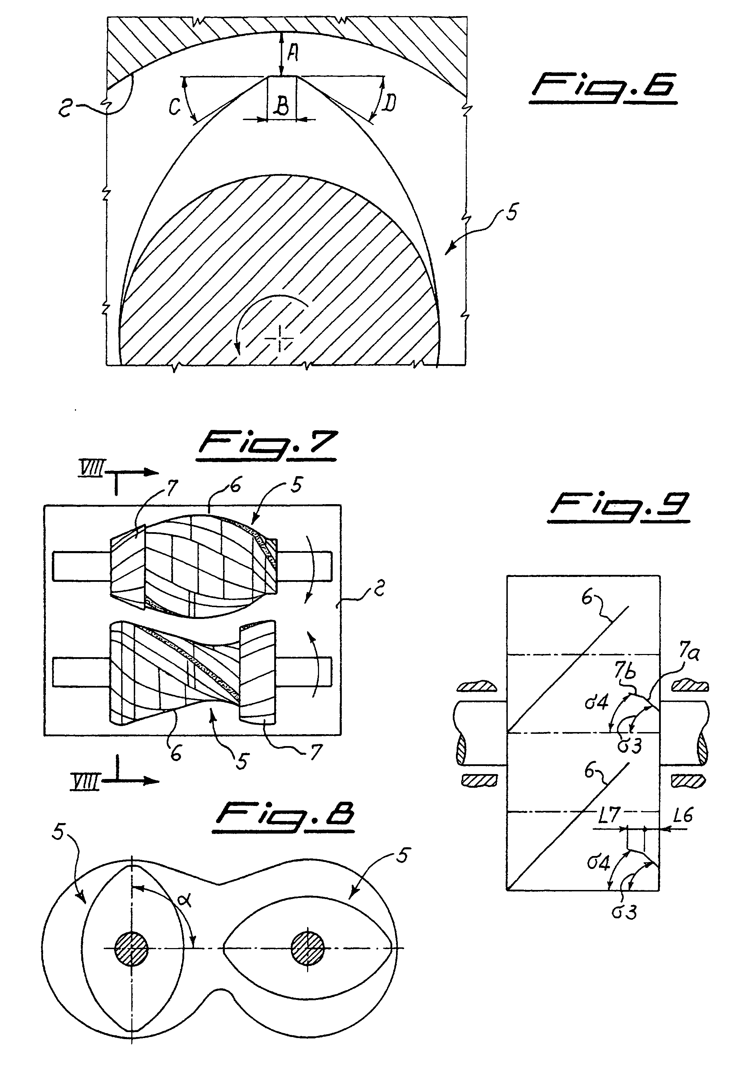

Once the two rotors have been assembled inside the mixing chamber 2 of the machine 1, it is also necessary to ensure that they are angular phase-displaced by a certain angle so as to achieve optimisation of that part of the distributive mixing action due to the exchange of material between the two half-chambers 2a,2b; more particularly (Figs. 8,9) the angle $\alpha$ of angular phase-displacement between the two rotors is advantageously between 70° and 125° and preferably between 85° and 120°.

## Claims

1. Internal mixer for mixing elastomers and the like, comprising a mixing chamber (2) delimited by walls (3a,3b) divided into two half-chambers (2a,2b), each of which houses internally a rotor (5) which has a first section (L1) of greater length in the axial direction, defining a thrusting wing (6), and a second section (L2) of smaller length in the axial direction, defining a counter-thrusting wing (7), both rotors being phase-displaced one another **characterized in that**. both thrusting and counter thrusting wings define a crest of own width (B), an angle of entry (C) into and an angle of exit (D) from the mixture at least one of said thrusting wing (6) or counter-thrusting wing (7) has a twist angle (β,σ), which is varied along its axial extension.

2. Internal mixer according to Claim 1, **characterized in that** the angle (α) of angular phase-displacement between the two rotors (5) is between 70° and 125°.

3. Internal mixer according to Claim 2, **characterized in that** said angle (α) of phase-displacement is preferably between 85° and 120°.

4. Internal mixer according to Claim 1, **characterized in that** the ratio (A/D5) between the minimum distance (A) of the crest of the rotor (5) from the wall of the chamber (2) and the diameter (D5) of the rotor itself lies within the following values:

$$0.01 < A/D5 < 0.015$$

5. Internal mixer according to Claim 1, **characterized in that** the ratio between the minimum distance (A) of the crest of the rotor (5) and the width (B) of the crest itself lies within the following values:

$$0.10 < A/B < 0.5$$

6. Internal mixer according to Claim 5, **characterized in that** the ratio between the minimum distance (A) of the crest of the rotor (5) and the width (B) of the crest itself lies within the following values:

$$0.15 < A/B < 0.25$$

7. Internal mixer according to Claim 1, **characterized in that** said angle of entry (β,σ) into the mixture varies in a continuous manner.

8. Internal mixer according to Claim 1, **characterized in that** said angle of entry (β,σ) varies in a discontinuous manner.

9. Internal mixer according to Claim 1, **characterized in that** said thrusting wing (6) or said counter-thrusting wing (7) has a first part (6a,7a) with an angle of entry (β3,σ3) of between 15° and 75°.

10. Internal mixer according to Claim 9, **characterized in that** said angle of entry (β3,σ3) of the first part (6a, 7a) of the thrusting wing (6) or of the counter-thrusting wing (7) is preferably between 30° and 60°.

11. Internal mixer according to Claim 1, **characterized in that** said thrusting wing (6) or said counter-thrusting wing (7) has a second part (6b,7b) with an angle of entry (β4,σ4) of between 15° and 75°.

12. Internal mixer according to Claim 11, **characterized in that** said angle of entry (β4,σ4) of the second part (6b,7b) of the thrusting wing (6) or of the counter-thrusting wing (7) is preferably between 25° and 60°.

13. Internal mixer according to Claim 1, **characterized in that** both the thrusting wing (6) and the counter-thrusting wing (7) of each rotor has a twist angle into the mixture, which is varied along its extension.

14. Internal mixer according to Claim 1, **characterized in that** the ratio between the axial lengths (L2/L1) of the counter-thrusting wing (7) and the thrusting wing (6) is between 0.05 and 0.5.

**15.** Internal mixer according to Claim 1, **characterized in that** the angle (C) of mastication of the rotor is between 15° and 35°.

**16.** Internal mixer according to Claim 15, **characterized in that** the angle (C) of mastication of the mixture is preferably between 20° and 25°.

**17.** Internal mixer according to Claim 1, **characterized in that** the angle (D) of exit of the rotor's wing from the mixture is between 25° and 70°.

**18.** Internal mixer according to Claim 17 **characterized in that** the angle (D) of exit from the mixture is preferably between 35° and 60°.

**Patentansprüche**

**1.** Interner Mischer zum Mischen von Elastomeren und dergleichen, umfassend eine durch Wände (3a, 3b) begrenzte Mischkammer (2), die in zwei Halbkammern (2a, 2b) unterteilt ist, von denen jede im Inneren einen Rotor (5) beherbergt, der einen ersten Abschnitt (L1) mit größerer Länge in der axialen Richtung besitzt, welcher einen Schubflügel (6) definiert, und einen zweiten Abschnitt (L2) mit kürzerer Länge in der axialen Richtung besitzt, welcher einen Gegenschubflügel (7) definiert, wobei beide Rotoren zueinander phasenversetzt sind, **dadurch gekennzeichnet, daß** beide Stütz- und Gegenschubflügel eine Spitze eigener Breite (B) definieren, wobei ein Eintrittswinkel (C) in und ein Austrittswinkel (D) aus der Mischung bei zumindest einem des Schubflügels (6) oder Gegenschubflügels (7) einen Drallwinkel (β, σ) besitzt, welcher entlang seiner axialen Erstreckung variiert.

**2.** Interner Mischer gemäß Anspruch 1, **dadurch gekennzeichnet, daß** der angulare Phasenversatzwinkel (α) zwischen den zwei Rotoren (5) zwischen 70° und 125° beträgt.

**3.** Interner Mischer gemäß Anspruch 2, **dadurch gekennzeichnet, daß** der Phasenversatzwinkel (α) vorzugsweise zwischen 85° und 120° beträgt.

**4.** Interner Mischer gemäß Anspruch 1, **dadurch gekennzeichnet, daß** das Verhältnis (A/D5) zwischen dem minimalen Abstand (A) der Spitze des Rotors (5) von der Wand der Kammer (2) und dem Durchmesser (D5) des Rotors selbst innerhalb der folgenden Werte liegt:

$$0,01 < A/D5 < 0,015.$$

**5.** Interner Mischer gemäß Anspruch 1, **dadurch ge-**
kennzeichnet, daß das Verhältnis zwischen dem minimalen Abstand (A) der Spitze des Rotors (5) und der Breite (B) der Spitze selbst innerhalb der folgenden Werte liegt:

$$0,10 < A/B < 0,5.$$

**6.** Interner Mischer gemäß Anspruch 5, **dadurch gekennzeichnet, daß** das Verhältnis zwischen dem minimalen Abstand (A) der Spitze des Rotors (5) und der Breite (B) der Spitze selbst innerhalb der folgenden Werte liegt:

$$0,15 < A/B < 0,25.$$

**7.** Interner Mischer gemäß Anspruch 1, **dadurch gekennzeichnet, daß** der Eintrittswinkel (β, σ) in die Mischung in einer kontinuierlichen Weise variiert.

**8.** Interner Mischer gemäß Anspruch 1, **dadurch gekennzeichnet, daß** der Eintrittswinkel (β, σ) in einer diskontinuierlichen Weise variiert.

**9.** Interner Mischer gemäß Anspruch 1, **dadurch gekennzeichnet, daß** der Schubflügel (6) oder der Gegenschubflügel (7) einen ersten Teil (6a, 7a) mit einem Eintrittswinkel (β3, σ3) zwischen 15° und 75° besitzt.

**10.** Interner Mischer gemäß Anspruch 9, **dadurch gekennzeichnet, daß** der Eintrittswinkel (β3, σ3) des ersten Teils (6a, 7a) des Schubflügels (6) oder des Gegenschubflügels (7) vorzugsweise zwischen 30° und 60° beträgt.

**11.** Interner Mischer gemäß Anspruch 1, **dadurch gekennzeichnet, daß** der Schubflügel (6) oder der Gegenschubflügel (7) einen zweiten Teil (6b, 7b) mit einem Eintrittswinkel (β4, σ4) zwischen 15° und 75° besitzt.

**12.** Interner Mischer gemäß Anspruch 11, **dadurch gekennzeichnet, daß** der Eintrittswinkel (β4, σ4) des zweiten Teils (6b, 7b) des Schubflügels (6) oder des Gegenschubflügels (7) vorzugsweise zwischen 25° und 60° beträgt.

**13.** Interner Mischer gemäß Anspruch 1, **dadurch gekennzeichnet, daß** sowohl der Schubflügel (6) als auch der Gegenschubflügel (7) eines jeden Rotors einen Drallwinkel in die Mischung besitzt, der entlang seiner Erstreckung variiert.

**14.** Interner Mischer gemäß Anspruch 1, **dadurch gekennzeichnet, daß** das Verhältnis der axialen Längen (L2/L1) des Gegenschubflügels (7) und des Schubflügels (6) zwischen 0,05 und 0,5 beträgt.

**15.** Interner Mischer gemäß Anspruch 1, **dadurch gekennzeichnet, daß** der Knetwinkel (C) des Rotors zwischen 15° und 35° beträgt.

**16.** Interner Mischer gemäß Anspruch 15, **dadurch gekennzeichnet, daß** der Knetwinkel (C) der Mischung vorzugsweise zwischen 20° und 25° beträgt.

**17.** Interner Mischer gemäß Anspruch 1, **dadurch gekennzeichnet, daß** der Austrittswinkel (D) des Rotorflügels aus der Mischung zwischen 25° und 70° beträgt.

**18.** Interner Mischer gemäß Anspruch 17, **dadurch gekennzeichnet, daß** der Austrittswinkel (D) aus der Mischung vorzugsweise zwischen 35° und 60° beträgt.

## Revendications

**1.** Malaxeur interne pour mélanger des élastomères et produits similaires, comprenant une chambre de mélange (2) délimitée par des parois (3a, 3b) et divisée en deux demi-chambres (2a, 2b) dont chacune abrite intérieurement un rotor (5) qui a une première section (L1) de plus grande longueur dans la direction axiale, définissant une aile de poussée (6), et une seconde section (L2) de moins grande longueur dans la direction axiale, définissant une aile de contre-poussée (7), les deux rotors étant en décalage de phase l'un par rapport à l'autre, *caractérisé en ce que* les deux ailes de poussée et de contre-poussée définissent une crête de largeur propre (B), un angle d'entrée (C) dans, et un angle de sortie (D) du, mélange, au moins l'une d'entre lesdites aile de poussée (6) et aile de contre-poussée (7) ayant un angle de torsion (β, σ) qui varie le long de son extension axiale.

**2.** Malaxeur interne selon la revendication 1, *caractérisé en ce que* l'angle (α) du décalage de phase entre les deux rotors (5) est compris entre 70° et 125°.

**3.** Malaxeur interne selon la revendication 2, *caractérisé en ce que* l'angle (α) du décalage de phase est de manière préférée compris entre 85° et 120°.

**4.** Malaxeur interne selon la revendication 1, *caractérisé en ce que* le rapport (A/DS) entre la distance minimale (A) de la crête du rotor (5) en partant de la paroi de la chambre (2) et le diamètre (D5) du rotor proprement dit est compris entre les valeurs suivantes :

$$0,01 < A/D5 < 0,015.$$

**5.** Malaxeur interne selon la revendication 1, *caractérisé en ce que* le rapport entre la distance minimale (A) de la crête du rotor (5) et la largeur (B) de la crête proprement dit est compris entre les valeurs suivantes :

$$0,10 < A/B < 0,5.$$

**6.** Malaxeur interne selon la revendication 5, *caractérisé en ce que* le rapport entre la distance minimale (A) de la crête du rotor (5) et la largeur (B) de la crête proprement dit est compris entre les valeurs suivantes :

$$0,15 < A/B < 0,25.$$

**7.** Malaxeur interne selon la revendication 1, *caractérisé en ce que* ledit angle de torsion (β, σ) dans le mélange varie d'une manière continue.

**8.** Malaxeur interne selon la revendication 1, *caractérisé en ce que* ledit angle de torsion (β, σ) varie d'une manière discontinue.

**9.** Malaxeur interne selon la revendication 1, *caractérisé en ce que* ladite aile de poussée (6) ou ladite aile de contre-poussée (7) possède une première partie (6a, 7a) avec un angle de torsion (β3, σ3) compris entre 15° et 75°.

**10.** Malaxeur interne selon la revendication 9, *caractérisé en ce que* ledit angle de torsion (β3, σ3) de la première partie (6a, 7a) de l'aile de poussée (6) ou de l'aile de contre-poussée (7) est de manière préférée compris entre 30° et 60°.

**11.** Malaxeur interne selon la revendication 1, *caractérisé en ce que* ladite aile de poussée (6) ou ladite aile de contre-poussée (7) possède une deuxième partie (6b, 7b) avec un angle de torsion (β4, σ4) comprise entre 15° et 75°.

**12.** Malaxeur interne selon la revendication 11, *caractérisé en ce que* ledit angle de torsion (β4, σ4) de la deuxième partie (6b, 7b) de l'aile de poussée (6) ou de l'aile de contre-poussée (7) est, de manière préférée compris entre 25° et 60°.

**13.** Malaxeur interne selon la revendication 1, *caractérisé en ce que* à la fois l'aile de poussée (6) et l'aile de contre-poussée (7) de chaque rotor ont un angle de torsion qui varie le long de son extension.

**14.** Malaxeur interne selon la revendication 1, ***caractérisé en ce que*** le rapport entre les longueurs axiales (L2/L1) de l'aile de contre-poussée (7) et de l'aile de poussée (6) est compris entre 0,05 et 0,5.

**15.** Malaxeur interne selon la revendication 1, ***caractérisé en ce que*** l'angle (C) de trituration du mélange du rotor est compris entre 15° et 35°.

**16.** Malaxeur interne selon la revendication 15, ***caractérisé en ce que*** l'angle (C) de trituration du mélange est de manière préférée compris entre 20° et 25°.

**17.** Malaxeur interne selon la revendication 1, ***caractérisé en ce que*** l'angle (D) de sortie du mélange de l'aile du rotor est compris entre 25° et 70°.

**18.** Malaxeur interne selon la revendication 1, ***caractérisé en ce que*** l'angle (D) de sortie du mélange est de manière préférée compris entre 35° et 60°.

Fig.1

Fig.2

Fig.3

Fig.4

Fig.5

*Fig.6*

*Fig.7*

*Fig.8*

*Fig.9*